# EUROPÄISCHE PATENTSCHRIFT

(11) **EP 2 223 401 B1**
(45) Veröffentlichungstag und Bekanntmachung des Hinweises auf die Patenterteilung: **03.04.2013**
(21) Anmeldenummer: 08802590.3
(22) Anmeldetag: 25.09.2008
(51) Int. Cl.: H02G 9/08

(54) **KANALSYSTEM ZUM AUFNEHMEN VON STROMKABELN**
DUCT SYSTEM FOR ACCOMMODATING POWER CABLES
SYSTÈME DE CONDUIT POUR ACCUEILLIR DES CÂBLES ÉLECTRIQUES

(30) Priorität: 19.12.2007 DE 102007061802
(43) Veröffentlichungstag der Anmeldung: 01.09.2010
(73) Patentinhaber: Dupre, Frank, 67346 Speyer (DE)
(72) Erfinder: Dupre, Frank, 67346 Speyer (DE)
(74) Vertreter: Dr. Weitzel & Partner
(86) Internationale Anmeldenummer: PCT/EP2008/008117
(87) Internationale Veröffentlichungsnummer: WO 2009/077020

(56) Entgegenhaltungen:
- CA-A1- 2 292 814
- DE-A1- 3 228 890
- DE-B4- 19 964 341
- DE-U1- 29 924 193
- FR-A- 2 821 372
- FR-A- 2 824 677

## Beschreibung

Die Erfindung betrifft ein Kanalsystem zum Aufnehmen und Führen von Stromkabeln, insbesondere von Hochspannungskabeln, und Infrastrukturleitungen.

Kanalsysteme zum Aufnehmen und Führen von Stromkabeln sind beispielsweise in WO 2006/012855 A1 beschrieben, dort als Infrastruktur-Kanal bezeichnet. Ferner beschreibt DE 201 13 897 U1 einen Kanal, der aus einzelnen Fertig-Segmenten zusammengefügt ist. DE 44 24 051 A1 beschreibt ein Kanalsystem zum Aufnehmen von Stromkabeln, mit einem begehbaren Kanal, durch dessen Wandung ein Fluid zur verbesserten Wärmeabfuhr geleitet werden kann. Aus DE 199 64 341 B4 ist bekannt, zur verbesserten Wärmeabfuhr von im Boden verlegten Stromleitungen graphithaltiges Verfüllmaterial zu verwenden.

CA 2 292 814 A1 beschreibt ein Kanalsystem zum Aufnehmen von Stromkabeln mit einem im Erdreich verlegten Graben und einem im Graben gegossenen oder vorgefertigten Kanal zum Aufnehmen von Stromkabeln und Infrastrukturleitungen.

DE 299 24 193 U1 beschreibt einen begehbaren Infrastrukturkanal zum Aufnehmen von Stromkabeln und sonstigen Leitungen. Der Kanal besteht aus Beton. Über die Wärmeleitfähigkeit des Materiales des Kanales ist nichts ausgesagt.

Hochspannungssysteme zur Übertragung elektrischer Energie werden zum weit überwiegenden Teil bisher mit Freileitungen realisiert. Dies wird insbesondere mit den niedrigen Investitionskosten und der ausgereiften Technik begründet.

Nachteile der Freileitung sind insbesondere die relativ hohen Leitungsverluste, die Höhe des elektromagnetischen Feldes auch in großen Entfernungen und der hohe laufende Wartungsaufwand. Für die Versorgungssicherheit nachteilig ist die hohe Anfälligkeit gegen insbesondere außerordentliche Witterungseinflüsse. Weiterhin nachteilig ist der hohe Flächenverbrauch. Die daraus resultierenden Folgen wurden bisher insbesondere den so genannten externen Kosten zugeordnet, durch die insbesondere ökologische Auswirkungen erfasst werden, wie zum Beispiel die landwirtschaftliche und ökologische Stör- und Zerschneidungsfunktion bei Biotopen oder auch das Gefährdungspotential für Vögel.

Ein weiterer Nachteil ist das vorgegebene Regelungsverhalten, wobei es bei definierter Belastung der Leitung, insbesondere der Freileitung, zu einer automatischen Trennung der Leitung vom Netz kommt. Dieses Abschalten kann im Extremfall zu flächendeckenden Stromausfällen führen.

Alle genannten Punkte schlagen auch direkt wirtschaftlich zu Buch, da immer häufiger Nutzungsentgelte für die Trasse bezahlt beziehungsweise auch ökologische Ausgleichszahlungen verlangt werden. Ein weiterhin belastender Sachverhalt, der bisher nicht in die Vergleichsrechnungen eingeflossen ist, ist die durch die schwindende Akzeptanz immer schwieriger und langwieriger werdende Planfeststellung solcher Leitungstrassen. Hier sind nicht nur die Schäden aus der zeitlichen Verzögerung, die sich insbesondere in fehlenden Einspeisemöglichkeiten für alternative Energieformen wie Windenergie beziehungsweise verfehlte Chancen des Stromhandels niederschlagen, sondern auch erhebliche Kosten der Rechtsverfolgung bewirken bis hin zur Enteignung entsprechender Flächen.

Als häufig diskutierte Alternative kommen erdverlegte Hochspannungskabel in Frage. Hauptnachteil von erdverlegten Kabeln sind die höheren Investitionskosten, die aufwendigen Eingriffe in den Boden und die längere Reparaturdauer in Fehlerfällen. Bei Überlastungen des Kabels droht eine Austrocknung der Bettungsmaterialien, was für die Zukunft eine schlechtere Wärmeableitung nach sich zieht. Dies hat eine Erhöhung der Leitungsverluste und ein schnelleres Altern sowie andere Gefährdungen der Kabelisolierung bis hin zur thermischen Zerstörung zur Folge. Auch sind erdverlegte Kabel der Gefahr ausgeliefert, bei Aushubarbeiten beispielsweise durch eine Baggerschaufel durchtrennt zu werden. Erdverlegten Hochspannungskabeln wird in der überwiegenden Literatur daher lediglich die Hälfte der Lebenserwartung einer Freileitungstrasse zugesprochen.

Alle Vorteile von Hochspannungskabeln, insbesondere die geringen Leitungsverluste, ohne die vorgenannten Nachteile lassen sich bei einer Verlegung der Kabel in einem Kanalsystem nutzen. Die Verlegung von Kabeln in tunnelförmigen Infrastruktur-Kanälen (ISK) ist bekannt; sie wurde jedoch, da die bisherigen Bauformen der ISK sehr teuer waren, ausschließlich in solchen Fällen genutzt, in denen andere Verlegemöglichkeiten ausgeschlossen waren.

Ein ganz wesentliches Problem von erdverlegten Hochspannungskabeln besteht in der genannten, starken Wärmeentwicklung mit den daraus folgenden Nachteilen.

Der Erfindung liegt die Aufgabe zugrunde, ein Kanalsystem zum Aufnehmen und Führen von Stromkabeln und Infrastrukturleitungen zu schaffen und dabei die mit der Wärmeentstehung verbundenen Probleme zu verringern oder zu beseitigen.

Diese Aufgabe wird durch die Merkmale von Anspruch 1 gelöst.

Demgemäß wird der ISK zum Aufnehmen der Stromkabel aus einem Material auf Betonbasis hergestellt, und dieses Material derart ausgewählt oder bestückt, dass es eine Wärmeleitfähigkeit aufweist, die deutlich oberhalb der Wärmeleitfähigkeit des üblichen Baubetons liegt. Die Wärmeleitfähigkeit sollte wenigstens 3,0 W/(K·m) betragen. Weiterhin werden außerhalb des ISK Körper zum Aufnehmen und/oder Ableiten von Wärmeenergie angeordnet.

Ein solcher unterirdischer ISK bietet neben der guten Wärmeabgabe des Kanals an das umgebende Erdreich grundsätzlich die Möglichkeit der zusätzlichen Kühlung der in ihm geführten Hochspannungskabel, das heißt die Abführung ihrer Wärmeverluste mit Hilfe eines strömenden Mediums wie strömender Luft. Dies kann einerseits realisiert werden, indem in bestimmten Abständen senkrechte Luftein- und Luftauslässe in der Umgebung vorgesehen werden: in diesem Falle werden die sich jeweils in zwei Luftauslässen gegenüberstehenden Luftsäulen dafür sorgen, dass aufgrund des temperaturabhängigen Dichteunterschieds der Luft die gesamte Luftsäule im Kanal in Bewegung gesetzt wird, so dass eine natürliche Konvektion stattfindet. Die Luftauslässe liegen dabei höher als die Lufteinlässe, so dass die natürliche Konvektion verstärkt wird.

Intensivieren lässt sich die Luftkühlung im Kanal mit Hilfe einer Zwangsumwälzung der Luft, in dem zum Beispiel in den Lufteinlässen und -auslässen Ventilatoren für eine intensive Umwälzung der Luft im ISK sorgen. Eine solche Zwangsumwälzung wird besonders vorteilhaft zu Zeiten, in denen Strom für den Betrieb der Ventilatoren kostengünstig verfügbar ist, beispielsweise nachts, durchgeführt.

Der Kühlungseffekt lässt sich durch das Ansaugen oder Mitführen von Wasser durch die Luft steigern, so dass die entstehende Verdunstungsenergie der Umgebung Wärme entzieht.

Die Wirksamkeit der beschriebenen Arten der Luftkühlung hängt allerdings von der Temperatur der dem Kanal zugeführten Außenluft ab. Sie ist damit im Sommer weitaus geringer - oder wirkt sich bei hohen Lufttemperaturen sogar negativ aus - als im Winter.

Will man von diesen jahreszeitlichen Schwankungen unabhängig werden, so könnten Kältemaschinen zur Luft-Vorkühlung im Bereich des Lufteinlasses eingesetzt werden. Solche Kältemaschinen sind jedoch investitionskostenintensiv und verursachen während des Betriebes zusätzliche Verluste und Verlustkosten.

Während der Herstellung des erfindungsgemäßen ISK ist ein offener Graben vorzusehen. Dessen lichte Weite ist deutlich breiter als der Außendurchmesser des ISK, da beidseits des ISK Arbeitsräume benötigt werden. Diese können vor Verfüllen des Grabens dazu genutzt werden, dass in ihnen Rohre, vorzugsweise aus Beton, Kunststoff, Kupfer oder Stahl beziehungsweise Edelstahl, untergebracht werden. Diese Rohre sollen als Luft-Erdwärmetauscher (LEWT) dienen und müssen daher einen zur gewünschten Luftzirkulation ausreichenden Querschnitt aufweisen. In entsprechenden Abständen sind mit Hilfe von Rohrstücken Querverbindungen zwischen diesen Rohren und dem ISK einerseits und zwischen diesen Rohren und der Grabenoberfläche andererseits herzustellen, so dass an diesen Stellen ein Luftaustausch zwischen diesen Rohren und dem ISK beziehungsweise zwischen diesen Rohren und der Umgebung andererseits vorgenommen werden kann. Diese Rohre werden untereinander und zum ISK mit möglichst großem Abstand, das heißt möglichst im Bereich der Böschung verlegt, beziehungsweise zum ISK hin isoliert.

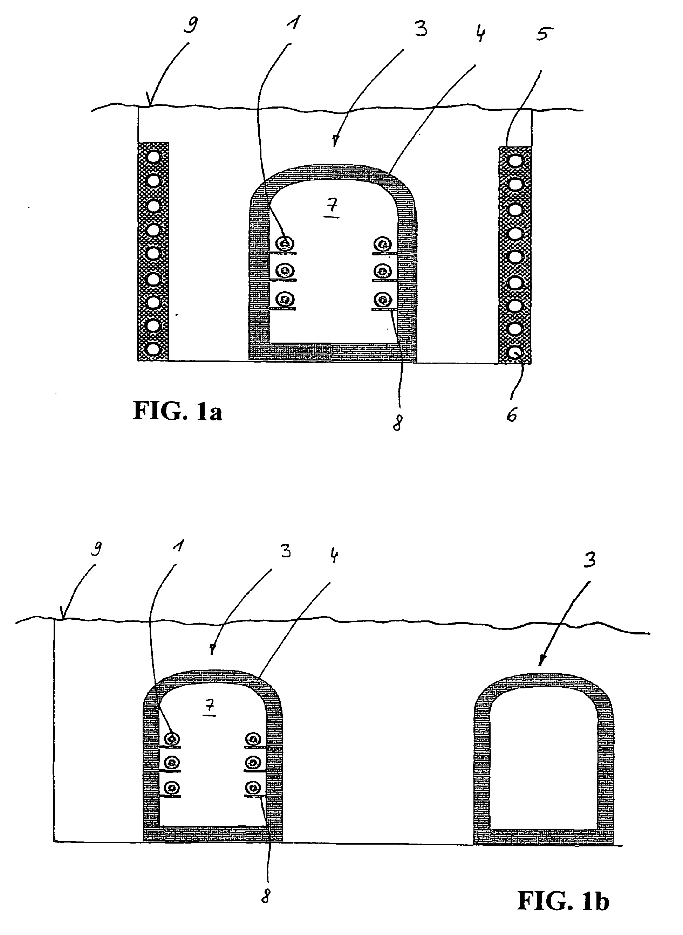

Die Rohre können entweder
a) direkt in den wiederverfüllten Erdboden oder
b) innerhalb eines zur Grabenrückfüllung verwendeten Flüssigboden nach Abbildung 1 oder
c) innerhalb von Betonwänden
verlegt werden. Statt der Rohre in den Betonwänden kommen jegliche andere Hohlräume in Betracht.

Zur Verbesserung der Wärmeleitfähigkeit des Materials des ISK können Zuschlagstoffe mit hoher Wärmeleitfähigkeit dem Material zugefügt werden, zum Beispiel Graphit (natürliches oder expandiertes), Kohlenstoff-Nano-Röhren, Phase-Changing-Materialien oder Anthrazit. Die Zuschlagstoffe sollen nicht nur der besseren Wärmeableitung des ISK in das umliegende Erdreich dienen, sondern auch dazu, die ebenfalls als Zuschlagstoff zusätzlich vorgeschlagenen Phase-Changing-Materialien, welche in der Lage sind, große Wärmemengen zu speichern, schneller zu aktivieren.

Der den ISK umgebende Arbeitsraum kann mit temporär verflüssigtem Boden (TAFB) verfüllt werden, welcher durch Zugabe von Kalk, Zement, Wasser und Plastifizierer aus den anstehenden Aushubmassen produziert wird und zusätzlich zum Beispiel mit Graphit, Kohlenstoff-Nano-Röhren, Phase-Changing-Materialien oder Anthrazit angereichert wird, um den Wärmeabtransport in das umliegende Erdreich des ISK noch weiter zu beschleunigen. Es kommt jeglicher Zuschlagstoff mit hoher Wärmeleitfähigkeit in Betracht.

Darüber hinaus führt die homogene Grabenverfüllung dazu, dass der ISK und Luft-Erdwärmetauscher optimal umschlossen werden. Darüber hinaus können hierdurch kritische Zwischenbauzustände vermieden, und ein schneller Baufortschritt sowie eine zusätzliche Stabilisierung des statischen Systems erreicht werden.

Im Arbeitsraum können mehrere Luft-Erdwärmetauscher eingebaut werden. Diese Luft-Erdwärmetauscher dienen zum einen der Vorkühlung der in den ISK konvektiv oder mechanisch eingesaugten Außenluft als auch bei entsprechend niedrigeren Außentemperaturen zur thermischen Aktivierung des umgebenden Bodens als zusätzliche Kühlreserve für entsprechende Belastungszustände.

Hier kann fallweise entschieden werden, ob bei mechanischer Belüftung im Winter kalte Außenluft mit zum Beispiel weniger als +5° direkt in den ISK eingeblasen wird und der LEWT ebenfalls mechanisch zur Auskühlung ausschließlich des Bodens herangezogen wird oder aber bei einer konvektiven Lüftung die Aufladung der Kanalkühlluft um wenige Grade in Verbindung mit der Auskühlung des umgebenden Erdbodens in Kauf genommen wird. Im Sommer kann zugunsten der Konvektion Luft zunächst in den LEWT und dann in den ISK eingeblasen werden. Unter extremen Bedingungen, das bedeutet bei hohen Lufttemperaturen, wird die angesaugte Außenluft zuerst durch die Rohrleitungen des LEWT geführt und somit vorgekühlt und anschließend erst dem ISK zugeführt. Natürlich ist es auch denkbar, den ISK selbst als LEWT zu nutzen, indem beispielsweise entsprechende Ventilatoren im Innenraum des ISK vorgesehen werden.

Die LEWT können beispielsweise durch Auslegen und Aneinandermuffen einzelner Abschnitte von Zement/Betonrohren realisiert werden. Vorschlagsgemäß kann man sich diese Rohre aber auch dadurch ersparen, dass in den mit Flüssigboden oder Magerbeton auszufüllenden Grabenbereich durch eine Schalung vor dem Auffüllen Dorne beziehungsweise Hohlzylinder eingebracht werden, die an ihrer Oberfläche eine Trennschicht, zum Beispiel eine Folie, aufweisen, so dass sie nach Verfestigung des Materials aus diesem soweit herausgezogen werden können, dass sie wieder mit einer Trennschicht versehen werden können und der nächste Grabenabschnitt verfüllt werden kann. Auch könnte an eine aufblasbare Schalung gedacht werden.

Ist die Arbeitsraumverfüllung wasserundurchlässig, so wird über der Arbeitsraumverfüllung ein Drainagevlies angeordnet und auf der Grabenwand des Arbeitsraumes vor der Verfüllung ebenso. Damit sich das eingeleitete Oberflächenwasser sammeln kann, wird im unteren Zwickel des Arbeitsraumes ein Schotterkeil angeordnet.

Die Vorbereitung des Baugrunds erfolgt durch eine übliche Bodenverfestigung mit einem Kalkzementgemisch, dem allerdings ebenfalls zum Beispiel Graphit (natürliches oder expandiertes), Anthrazit, Kohlenstoff-Nano-Röhren oder Phase-Changing-Materialien) zugefügt werden können, um hier die Wärmedurchleitfähigkeit zu verbessern.

Um die betontechnologisch wichtige Gleitung des Bauwerks auf dem Untergrund zu verbessern, wird der vorbereitete und planeben abgezogene Baugrund mit einer Aluminiumfolie überdeckt. Auf diese wird Graphitpulver oder ein anderes Gleitmittel gestreut und eine weitere Alufolie darüber gelegt, auf welche dann betoniert wird.

Zusätzlich zu dem LEWT in Längsrichtung wird ein halbkreisförmig gebogener Luft-Erdwärmetauscher mit dem Kanal verbunden und zwar oberhalb des höchsten Kabels und unterhalb des untersten Kabels. Vor dem Wiedereintritt in den ISK unten wird durch eine Verengung des Faserzementrohres über den so genannten Venturieffekt die Möglichkeit geschaffen, Wasser anzusaugen, was zusätzlich zu einer Verdunstungskühlung führt und gleichzeitig die Auftriebskräfte im Kamin stärkt.

Die durch den Luft-Erdwärmetauscher in Längsrichtung in den ISK eingeführte Luft wird über einen möglichst hohen Kamin wieder abgeführt. Am Fuße des Kamins besteht die Möglichkeit, eine Aufwindturbine anzuordnen, mit deren Energie mechanisch oder elektrisch eine Abtriebsturbine zum Einblasen von Luft in den Erdwärmetauscher betrieben wird, um die Kühlwirkung des Belüftungssystems zu verstärken.

Zudem ergibt sich durch den Kamin, in dem eine erwärmte Luftsäule steht, der Effekt einer natürlichen Konvektion im ISK, die mit zunehmender Kaminhöhe intensiver wird. Durch die Konvektion ergibt sich im ISK auch schon ohne Zwangsbelüftung eine verbesserte Kabelkühlung.

Im Normalbetrieb, aber insbesondere bei Höchst- oder Überlast der Kabelanlage sowie zu Zeiten niedriger Strompreise kann eine Zwangsbelüftung mittels eines Induktionsleitersystems betrieben werden, das im ISK parallel zu den Hochspannungskabeln geführt wird und den Hochspannungskabelsystemen elektrische Energie entzieht. Damit wird das Kühlsystem unabhängig von einer äußeren Stromversorgung des ISK. Beispielsweise kann das gesamte Kanalsystem nachts, wenn die Umgebungstemperatur und insbesondere Lufttemperatur fällt, thermisch aktiviert werden, indem über Zwangsumwälzungen, die mit günstigem Nachtstrom betrieben werden, kalte Luft den Rohrleitungen, dem ISK und/oder den übrigen LEWT zugeführt wird.

Bei Verwendung von Phase-Changing-Material wird dieses ebenfalls thermisch aktiviert, indem das Phase-Changing-Material die darin gespeicherte Wärmeenergie an die Umgebung abgibt und gleichzeitig seinen Aggregatzustand ändert, indem es beispielsweise erstarrt. Tagsüber und bei relativ hohen Umgebungs- beziehungsweise Lufttemperaturen könnte dann auf eine Zwangsumwälzung verzichtet werden, da genügend "Kälte" im Kanalsystem vorhanden ist, um die erhöhten Temperaturen - auch infolge der Leistungsverluste in den Stromkabeln - zu kompensieren, sodass die natürliche Konvektion für eine ausreichende Kühlung sorgen kann. Das Phase-Changing-Material nimmt dann bei erhöhten Temperaturen einen Teil der Wärme auf, indem es wiederum seinen Aggregatzustand ändert und beispielsweise flüssig wird.

Für den Fall einer besonders hohen Belastung des ISK, insbesondere durch die Massen des darüber liegenden Erdreichs, können Fasern von Materialien mit erhöhter Festigkeit, beispielsweise Stahlfasern, dem Material des ISK zugefügt werden. Alternativ dazu kann eine konventionelle Bewehrung des ISK vorgesehen werden, wobei die Bewehrung dann vorzugsweise einlagig erfolgen kann und gemäß der Lastverläufe entsprechend so gebogen werden kann, dass sie einmal innen und einmal außen liegt. Eine solche einlagige Bewehrung kann auch dazu verwendet werden, um Kühlrohre zu fixieren, wenn eine zusätzliche Bauteilaktivierung durch Kühlwasser vorgesehen wird. Ein solches zusätzliches Rohrsystem bietet sich entweder zur weiteren Kühlung und Leistungssteigerung des Systems an oder auch zur zusätzlichen Wärmegewinnung mittels Wärmepumpe, wenn in der Nähe des ISK entsprechende Wärmeverbraucher angesiedelt sind.

Solche Kühlrohre, beispielsweise aus Beton, Kunststoff, Kupfer oder Edelstahl, können selbstverständlich auch in den thermisch aktivierten Arbeitsraum gelegt werden. Sollte darüber hinaus eine zusätzliche Kühlung erforderlich sein, können außerhalb des Arbeitsraums gewöhnliche Erdwärmesonden eingesetzt werden.

Der Luft-Erdwärmetauscher von ca. 60 cm Innendurchmesser, welcher unten im beziehungsweise teilweise unterhalb des Arbeitsraumes verlegt wird, kann dergestalt mit dem TAFB eingegossen werden, dass mit Hilfe einer temporären Schalung ein Abstand von zum Beispiel 20 cm zum ISK freigehalten wird, welcher dann nach Aushärten und Ziehen der Schalung mit einer thermischen Isolierung zum Beispiel aus Glasschotter versehen wird.

Auch oberhalb dieses Luft-Erdwärmetauschers kann eine thermische Isolierung vorgenommen werden, die ebenfalls aus Glasschotter bestehen könnte. Erfindungsgemäß ist sie darüber hinaus mit Geotextil abzudecken, bevor die weitere Arbeitsraumverfüllung mit dem vorübergehend verflüssigten Erdmaterial erfolgt.

Über die beiden im weiteren Verlauf des Arbeitsraumes untergebrachten LEWT von ca. 0 40 wird gegebenenfalls ebenfalls eine thermische Isolierung aufgebracht.

In warmen Ländern kann darüber hinaus oberhalb des ISK ebenfalls eine thermische Isolierung angebracht werden.

Dem Füllboden kann eine Armierung in Form von Fasern, insbesondere Metall- oder Kunststofffasern zugemischt werden, so dass eine besondere Widerstandsfähigkeit des Füllbodens sichergestellt werden kann.

Zur Führung der Stromleitungen im Innenraum des ISK können Konsolen, beispielsweise aus Beton beziehungsweise Polymerbeton vorgesehen sein, in denen die Stromleitungen geführt und niedergehalten werden, so dass bei einem Kurzschluss ein Herausreißen der Kabel aus den Konsolen verhindert wird. Den Konsolen kann ebenso eine Armierung der Gestalt beigemischt werden, so dass zusätzliche Kunststoff- oder Metall-Fasern für eine erhöhte Festigkeit sorgen.

Die folgenden Vorteile ergeben sich aus der folgenden Erfindung:
1. Einfache, problemlose Verlegung.
2. Idealer mechanischer Schutz der Kabel, damit höhere Verfügbarkeit.
3. Nachrüstbarkeit
   - zum Beispiel spätere Verlegung oder Austauschen (Retrofitting) von Kabelsystemen;
   - zum Beispiel Ertüchtigung von Kabeln durch Nachrüsten mit Belüftungs- oder Kühlsystemen beziehungsweise auch späteres

Verstärken dieser Systeme.
4. Mehrfach-Nutzung durch unterschiedliche Systeme (alle Medien der Ver- und Entsorgung).
5. Schnelle Fehlersuche und Reparatur der Kabel, damit höhere Verfügbarkeit.
6. Einfache und schnelle Reparaturen/Wartungen ohne Erdarbeiten, Flurschäden etc.
7. Zusatzleiter, zum Beispiel zur Magnetfeldkompensation, sind leicht mitzuführen.
8. Einfach zu realisierendes Temperatur-Monitoring (System zur Überlastungs-Meldung und zur Belastbarkeitsprognose).
9. Höhere Leistungsreserven/Überlastbarkeit.
10. Gegenüber der Erdverlegung verminderte Übertragungsverluste wegen der geringeren Kabeltemperaturen im ISK.
11. Erhöhung der Durchleitekapazität und/oder Verminderung der Leistungsverluste zu Starklastzeiten durch thermische Voraktivierung des Systems.
12. Keine wesentliche thermische Bodenbelastung - kein Austrocknen des Bodens, das heißt Ersparnis einer thermischen Stabilisierung des Kabelgrabens.
13. Volle Nutzbarkeit der Trasse oberhalb des ISK.
14. Magnetische Schirmung, auch abschnittsweise, leicht zu realisieren.
15. Einsatz von aufwandsminimierten slim cables, denn: die Kabel sind geschützt, gut zugänglich und wenig beansprucht.
16. Einfaches Cross-Bonding (oder einseitige Schirmerdung), auch bei vieradrigen Systemen (Drehstromsysteme mit Ader-Redundanz) und bei Bipolarsystemen.
17. Günstige Anordnungen für bipolare Kabelsysteme.
18. Keine Störung durch Grabenöffnung im Straßen- beziehungsweise Gehwegbereich.
19. Minimierung der Trassenlänge.
20. Kabelbelegung unabhängig von der Baumaßnahme.
21. Leichtes und schnelles Reparieren und gegebenenfalls auch Austauschen der Kabel.
22. Nur geringe thermische beziehungsweise elektromagnetische Beeinflussungen des menschlichen Lebensbereiches.
23. Hohe Redundanz auch bei Belegung mit nur einem Leitungsstrang (da das Kabel aufgrund der thermischen Reserven in einem ISK-System überlastet werden kann). Auf die schnelle Reparaturmöglichkeit wurde bereits hingewiesen.
24. Der Einsatz von Kabeln mit Aluminiumleitern, abhängig von der weiteren Rohstoffpreisentwicklung, ist eher möglich als zum Beispiel bei der Erdverlegung.
25. Gegenüber der Erdverlegung deutlich verminderte Trassenbreite.

Die Erfindung ist anhand der Zeichnung näher erläutert. Darin ist im Einzelnen Folgendes dargestellt:
- Figur 1a: zeigt ein Kanalsystem mit einem ISK in einem Vertikalschnitt, wobei Rohrleitungen in einem Körper angeordnet sind.
- Figur 1b: zeigt ein Kanalsystem wie in Figur 1a, jedoch mit einem zusätzlichen ISK, der als LEWT dient.
- Figur 2: zeigt einen Ausschnitt aus einem Kanalsystem, wiederum in einem Vertikalschnitt, mit einem ISK (teilweise weg geschnitten) und der neben dem ISK befindlichen Umgebung.
- Figur 3: zeigt eine perspektivische Darstellung von Konsolen für den ISK.
- Figur 4: zeigt eine Schnittdarstellung des Gegenstandes von Figur 3 entlang der Pfeile A - A.

In Figur 1 ist ein Kanalsystem mit einem unterirdischen, begehbaren ISK 3 dargestellt, wobei der ISK 3 durch eine im Querschnitt im wesentlichen rechteckige ISK-Wandung 4 gebildet wird. Der ISK 3 ist unterhalb einer Erdoberfläche 9 gänzlich im Erdreich versenkt. Die ISK-Wandung 4 ist im oberen Bereich des ISK 3 bogenförmig ausgebildet, um eine bessere Druckverteilung der auf den ISK 3 einwirkenden Gewichtskräfte zu gewährleisten. Um die Wärmeleitfähigkeit des ISK 3 zu verbessern, können dem Material - vorliegend Beton - Zuschlagstoffe, wie zum Breispiel Graphit (natürliches oder expandiertes), Kohlenstoff-Nano-Röhren, Phase-Changing-Material, sonstige verdichtete Kohlenstoffe oder Anthrazit sowie Metallspäne zugefügt werden, so dass die Wärmeleitfähigkeit deutlich oberhalb der des üblichen Baubetons liegt.

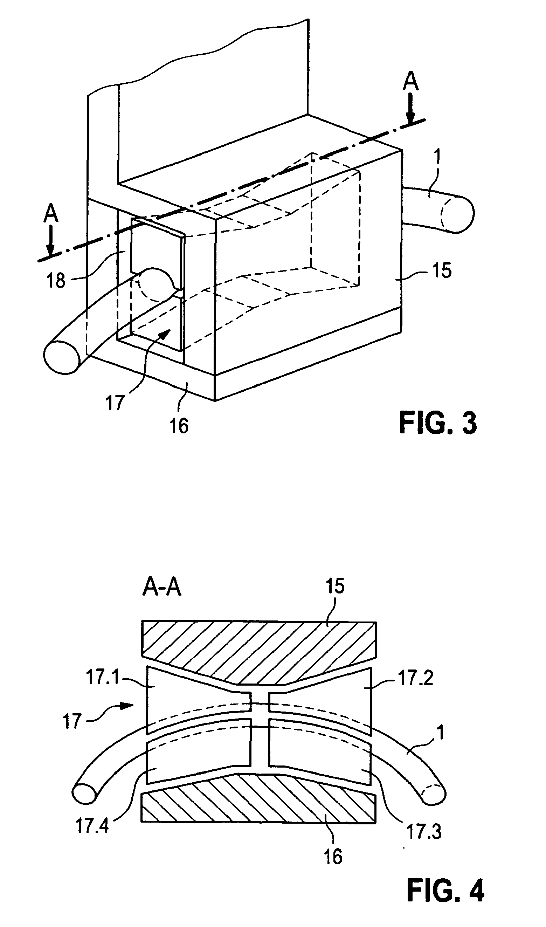

Die ISK-Wandung 4 umhüllt einen Innenraum 7 des ISK 3, in dem Stromkabel 1 geführt werden. Die Stromkabel 1, die im wesentlichen parallel zur Längsachse des ISK 3 verlaufen, sind an den senkrechten Seiten der ISK-Wandung 4 im Innenraum 7 angeordnet. Dabei können die Stromkabel 1 mit Hilfe von Halterungen 8, beispielsweise in Form eines Kragarmregals oder in Form eines Hakens, die an den Innenwänden der ISK-Wandung 4 angebracht sind, entlang des ISK 3 geführt werden. Weiterhin ist denkbar, solche Halterungen 8 zur Führung von Stromkabeln 1 auch an der Decke und/oder auf dem Boden des ISK 3 auszuführen. Eine weitere Ausführungsform solcher Halterungen ist in den Figuren 3 und 4 dargestellt.

Seitlich außerhalb der ISK-Wandung 4 sind Körper 5 zum Aufnehmen und Ableiten von Wärmeenergie angeordnet. Die Körper 5 weisen in ihrem Inneren Rohrleitungen 6 auf. Die Rohrleitungen 6 können beispielsweise aus Beton, Kunststoff, Stahl, Edelstahl oder aus einem sonstigen Material bestehen. Sie dienen vorliegend als Luft-Erdwärmetauscher, so dass die sie durchströmende Luft Wärme aus dem Erdreich aufnehmen oder abgeben kann. Denkbar wäre es natürlich auch, dass Innere der Rohrleitungen 6 mit einem Medium, wie beispielsweise Wasser zu befüllen, so dass bei einer Beschädigung der Rohrleitungen 6, beispielsweise bei Aushubarbeiten, keine umweltgefährdenden Substanzen in das Erdreich austreten können. Der Körper 5 weist vorliegend eine im Querschnitt gesehen rechteckige Form auf, wobei die Rohrleitungen 6 parallel übereinander angeordnet sind. Es ist denkbar, den Körper 5 beispielsweise in einer anderen Querschnittsform anzuordnen, oder die Rohrleitungen 6 sogar frei von einem Körper 5 direkt im Erdreich anzuordnen.

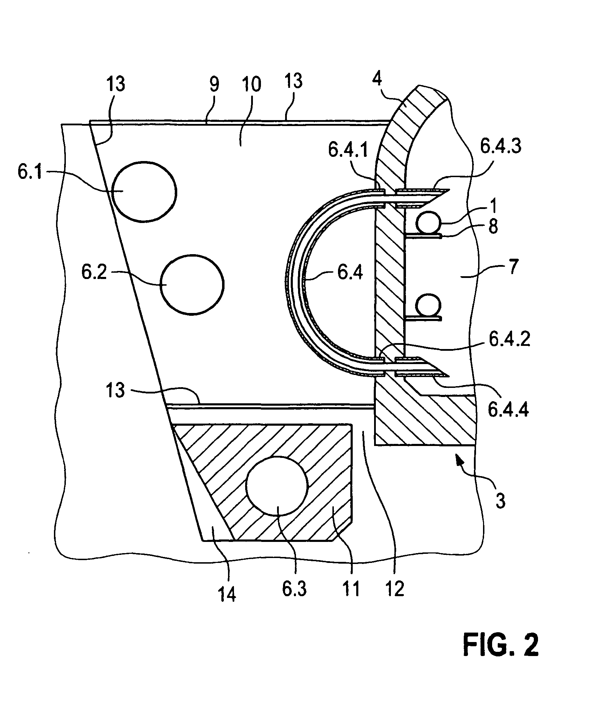

Eine solche Anordnung zeigt Figur 2. Dabei sind, wie ersichtlich, insgesamt drei Rohrleitungen 6 in einem Graben 10 unterhalb der Erdoberfläche angeordnet. Vorliegend weisen die beiden höher liegenden, im Arbeitsraum angeordneten Rohrleitungen 6.1 und 6.2 den gleichen Durchmesser auf. Die unterhalb der Rohrleitung 6.2 angeordnete Rohrleitung 6.3 weist einen größeren Durchmesser auf. Alle Rohrleitungen können entsprechend dem Platzbedarf beliebig im Arbeitsraum angeordnet werden.

Die Rohrleitungen 6 können im Graben 10 über einen temporär verflüssigten Boden (TAFB) verfüllt werden, welcher beispielsweise durch Zugabe von Kalk, Zement, Wasser und Plastifizierer aus den Aushubmassen produziert wird. Er kann aber auch zusätzlich mit Graphit (natürliches oder expandiertes), Anthrazit, Stahlspänen, Phase-Changing-Material, Kohlenstoff-Nano-Röhrchen oder sonstigen verdichteten Kohlenstoffen angereichert werden, um den Wärmeabtransport in das umliegende Erdreich des ISK 3 noch weiter zu beschleunigen. Die Rohrleitung 6.3 wie auch die übrigen Rohrleitungen 6 können auch durch Gießen des TAFB hergestellt werden. Dazu wird ein Dom mit dem Durchmesser der Rohrleitung 6.3 in den Graben 10 gelegt und mit dem temporär verflüssigten Boden verfüllt. Nach Aushärtung des Betons wird der Dorn entfernt und es entsteht ein hohler Rohrkörper 11. Natürlich ist es auch denkbar, die Rohrleitungen durch eine aufblasbare Schalung, beispielsweise einen mit Luft oder Wasser befüllbaren Schlauch, anstelle des Doms herzustellen. Dabei kann zwischen der der ISK-Wandung 4 zugeordneten Stirnseite des Rohrkörpers 11 ein Zwischenraum 12 vorgesehen sein, der mit einer thermischen Isolierung beispielsweise aus Glasschotter versehen wird. Vorliegend ist in der Tiefe zwischen den Rohrleitungen 6.1 und 6.3 eine zusätzliche im Querschnitt halbkreisförmige Rohrleitung 6.4 direkt an der äußeren ISK-Wandung 4 des ISK 3 angeordnet. Auch diese dient als Wärmetauscher.

Dabei kann die Rohrleitung 6.4 innen hohl sein, eine oder mehrere Leitungen zum Transport von Medium wie Gas - beispielsweise Luft - oder einer Flüssigkeit wie Wasser aufweisen oder ausbilden. Die Rohrleitung 6.4 kann mediumleitend mit den anderen Rohrleitungen 6 und/oder zusätzlichen ISK 3 verbunden sein. Die Rohrleitung 6.4 ist vorzugsweise mit der ISK-Wandung 4 derart verbunden, sodass eine Durchführung des in der Rohrleitung 6.4 geführten Mediums durch die ISK-Wandung 4 oder durch den ISK 3 selbst möglich ist. Vorteilhaft ist ein oberes Bogenende 6.4.1 der Rohrleitung 6.4 oberhalb des höchsten Stromkabels 1 und ein unteres Bogenende 6.4.2 unterhalb des niedrigsten Stromkabels 1 am ISK 3 angeordnet. Beispielsweise kann die der Rohrleitung 6.4 zugewandte ISK-Wandung 4 Ausnehmungen aufweisen, in die die beiden Bogenenden 6.4.1, 6.4.2 der Rohrleitung 6.4 hineinragen. Zur Abdichtung der Durchführung können jedwede, dem Fachmann als geeignet erscheinende Dichtmittel Verwendung finden. In der ISK-Wandung 4 kann zusätzlich eine Durchgangsbohrung vorgesehen sein, die beispielsweise dem Innendurchmesser der Rohrleitung 6.4 entspricht, sodass Medium aus der Rohrleitung 6.4 in den Innenraum 7 des ISK 3 oder an diesem vorbei wieder aus dem ISK 3 geführt werden kann.

Im Innenraum 7 des ISK 3 sind auf Höhe der Durchführung ebenfalls in der ISK-Wandung 4 Ausnehmungen vorhanden, wobei jeweils ein oberer Rohrstutzen 6.4.3 sowie ein unterer Rohrstutzen 6.4.4 in die entsprechende Ausnehmung eingreift. Auch die Rohrstutzen 6.4.3, 6.4.4 sind gegenüber der Durchführung wie oben beschrieben abgedichtet. Die beiden Rohrstutzen 6.4.3, 6.4.4 weisen einen vergrößerten Öffnungsdurchmesser, vorliegend in Form eines zur Längsachse der Rohrstutzen 6.4.3, 6.4.4 nicht senkrechten Anschnitts auf. Denkbar sind natürlich alle möglichen Öffnungsformen der Rohrstutzen 6.4.3, 6.4.4, die den Öffnungsquerschnitt vergrößern.

Dabei sind die Rohrstutzen 6.4.3, 6.4.4 vorteilhaft derart angeordnet, sodass die durch den Anschnitt vergrößerte Öffnung des oberen Rohrstutzens 6.4.3 im wesentlichen nach unten zum Stromkabel 1 und die Öffnung des unteren Rohrstutzens 6.4.4 im wesentlichen nach oben zum Stromkabel 1 weist. Möglich wäre auch eine andere Anordnung der Öffnungen der Rohrstutzen 6.4.3, 6.4.4. Die Rohrstutzen 6.4.3, 6.4.4 nehmen den aufsteigenden Mediumvolumenstrom, hier also die aufgrund der Leistungsverluste der Stromkabel 1 erwärmte und nach oben steigende Luft, auf und führen diese in die Rohrleitung 6.4. Da die Rohrleitung 6.4 als LEWT fungiert, wir die erwärmte Luft vorzugsweise abgekühlt, wobei die Wärme an das umgebende Erdreich (TAFB), die Rohrleitungen 6 oder einen weiteren, die Rohrleitung 6.4 umgebenden, LEWT abgegeben wird. Dabei sinkt das kältere Medium - die kältere Luft - in der Rohrleitung 6.4 nach unten und wird am unteren Rohrstutzen 6.4.4 wieder dem Innenraum 7 des ISK 3 zugeführt.

Die Rohrleitung 6.4 kann in allen erdenklichen Formen sowie unterschiedlichen Querschnitten und -formen entsprechend der benötigten Kühlleistung gewählt werden. Auch kann sich der Querschnitt entlang der länglichen Ausdehnung einer Rohrleitung 6.4 wenigstens stetig ändern. Die Rohrleitungen 6.4 sowie die zugehörigen Durchführungen und/oder die Rohrstutzen 6.4.3, 6.4.4 können an der gesamten ISK-Wandung 4 angebracht sein. Dabei können die Rohrleitungen 6.4 eine vom Bogen abweichende Form aufweisen und auch mehrere Rohrstutzen 6.4.3, 6.4.4 pro Rohrleitung 6.4 aufweisen. Es kann eine Vielzahl von Rohrleitungen 6.4 und Rohrstutzen 6.4.3, 6.4.4 vorgesehen sein, die in Längsrichtung des ISK 3 in Abständen zueinander - beispielsweise alle 50 cm - angeordnet sind. Denkbar sind auch Zwangsumwälzungen wie Ventilatoren, die in den Rohrleitungen 6.4 oder in der näheren Umgebung dieser angeordnet sein können.

Für die Rohrleitung 6.4 sowie für die Rohrstutzen 6.4.3, 6.4.4 sind alle bereits oben erwähnten Werkstoffe, wie zum Beispiel Edelstahl, und Werkstoffzusätze, wie beispielsweise Kohlenstoff-Nano-Röhren, denkbar.

In Figur 1b ist zusätzlich ein zweiter ISK 3 beabstandet zu einem vorhandenen ISK 3 angeordnet. Dabei kann der zusätzliche ISK 3 frei von Stromkabeln oder Halterungen hierfür sein und als zusätzliche Rohrleitung beziehungsweise als zusätzlicher LEWT dienen. Dazu kann der zusätzliche ISK 3 mit dem/den vorhandenen ISK 3 und/oder den Rohrleitungen 6 mediumleitend in Verbindung stehen. Es kann auch eine Vielzahl von zusätzlichen ISK 3 nebeneinander oder übereinander im Graben 10 angeordnet sein. Auch kann ein als LEWT verwendeter, zusätzlicher ISK 3 als Teil eines unterirdischen Transportsystems (CargoCap) dienen oder zusätzlich sonstige Aufgaben erfüllen.

In den Rohrleitungen kann zusätzlich eine Bohrung vorgesehen sein, die in Form einer Venturi-Düse ausgeführt sein kann (nicht dargestellt). Bevorzugt ist diese Bohrung als Durchgangsbohrung durch die Rohrleitung ausgeführt. Die Bohrung kann sich dabei weiter in den Arbeitsraum des Grabens 10 ausdehnen und beispielsweise mit einer wasserführenden Leitung in Verbindung stehen. Durch die an der Bohrung vorbeiströmende Luft wird in der Bohrung ein Unterdruck erzeugt, der Wasser in das Innere der Rohrleitung ansaugt. Dieses Wasser verdunstet vorzugsweise, wobei es Energie aufnimmt und den Kühleffekt zusätzlich verstärkt.

Wird ein Material zur Verfüllung des Grabens 10 verwendet, welches wasserundurchlässig ist, so muss die Innenseite, also die dem ISK 3 zugewandte Seite des Grabens 10 mit einem Drainagevlies 13 ausgekleidet werden. Ebenfalls wird auf der Erdoberfläche 9 beziehungsweise unterhalb der Erdoberfläche 9 ein solches Drainagevlies 13 angeordnet. Zur besseren Abführung des sich sammelnden Wassers wird im unteren Zwickel des Grabens 10 ein Schotterkeil 14 vorgesehen, so dass Wasser sich im Schotter 14 sammelt und dort abfliesen kann.

Natürlich ist es denkbar, dass die Rohrleitungen 6 und insbesondere der ISK 3 nicht direkt im Graben 10 gegossen werden, sondern als Fertigelemente in den Graben 10 eingebracht werden.

In Figur 3 sind zwei Konsolen 15, 16 gezeigt, die ein Stromkabel 1 umschließen. Die Konsolen 15, 16 übernehmen dabei die Funktion der Halterungen 8 aus der Figur 1. Vorzugsweise ist die untere Konsole 16 im Querschnitt L-förmig ausgebildet, während die obere Konsole 15 einen Z-förmigen Querschnitt aufweist. In dem von den beiden Konsolen 15, 16 umschlossenen Hohlraum 18 befindet sich eine Kabelführung 17.

Die Kabelführung 17 ist in Figur 4 detailliert dargestellt. Sie umfasst in ihrem Inneren eine bogenförmige Öffnung von vorzugsweise kreisrundem Querschnitt, so dass das Kabel in einem verhältnismäßig großen Radius (hier übertrieben dargestellt) durch die Konsolen 15, 16 geführt wird. Diese sattelähnliche Abstützung des Stromkabels 1 erlaubt es, auf eine durchgehende Halterung, beispielsweise in Form eines Kragarmregals, zu verzichten, so dass lediglich in gewissen Abständen das Stromkabel 1 von den Konsolen 15, 16 getragen wird. Dazu ist eine Vielzahl von Konsolen 15, 16 entlang des ISK 3 angeordnet. Der Abstand der Konsolen 15, 16 zueinander wird je nach Querschnittsdurchmesser und Anzahl der Stromkabel 1 pro Konsole 15, 16 variiert. Zudem können mehrere Konsolen 15, 16 übereinander angeordnet sein, so dass mehrere Leitungen, insbesondere Stromkabel 1 parallel und übereinander entlang des ISK 3 geführt werden können. Durch eine Verspannung der Konsolen 15, 16 gegeneinander wird ein Herausreißen des Stromkabels 1 aus der Konsole 15, 16, wie dies beispielsweise bei Kurzschluss vorkommt, vermieden, so dass das Stromkabel 1 in dem Fall nicht beschädigt wird. Die Konsolen 15, 16 können ebenfalls aus einem Material auf Betonbasis bestehen und ebenso mit den oben genannten Zuschlagstoffen mit erhöhter Wärmeleitfähigkeit angereichert sein. Auch ist beispielsweise als Material für die Konsolen 15, 16 Faserzement oder eine Konstruktion aus Stahl oder sonstigen geeigneten Materialien denkbar. Ebenso können die Konsolen 15, 16 abweichend von der L- oder Z-Querschnittsform ausgebildet sein. In dem Fall müssen diese eine Haltekraft aufweisen, sodass sie die in ihnen verlaufenden Kabel sicher führen und niederhalten können.

Die Kabelführung 17 umfasst vorliegend vier Teilstücke 17.1, 17.2, 17.3, 17.4. Die dem Stromkabel 1 zugewandten Oberflächen der Teilstücke 17.1, 17.2, 17.3, 17.4 weisen konkave Einwölbungen auf, so dass das Stromkabel 1 in ihnen satt aufliegen kann. Die dem Stromkabel 1 gegenüberliegenden Seiten der Teilstücke 17.1 bis 17.4 weisen jeweils eine Schräge auf. Die Konsolen 15, 16 weisen ebenfalls eine entsprechende Gegenkontur auf - vorliegend sind die Konsolen 15, 16 in ihrem Querschnitt pyramidenstumpfartig ausgebildet -, so dass die Schrägen kraft- und/oder formschlüssig in Längsrichtung des Stromkabels 1 miteinander klemmbar sind.

Bei der Montage der Konsolen 15, 16 wird das Stromkabel 1 in den Hohlraum 18 eingebracht beziehungsweise die Konsole 15 auf die Konsole 16 montiert. Anschließend werden die beiden unteren Teilstücke 17.3, 17.4 der Kabelführung 17 jeweils von der entsprechenden Seite zwischen Stromkabel 1 und Konsole 16 eingelegt. Anschließend werden die beiden übrigen Teilstücke 17.1, 17.2 von den beiden Seiten ebenfalls in den Hohlraum 18 eingelegt. Um ein sattes Aufliegen des Kabels in den Teilstücken zu erreichen, werden die Teilstücke unter Kraftaufwand in das Innere der Konsole getrieben. Die dem Kabel zugewandten Oberflächen der Teilstücke sollten bevorzugt spielfrei auf der Oberfläche des Stromkabels 1 aufliegen, so dass Bewegungen des Kabels - beispielsweise infolge von Wärmedehnungen - und somit das Reiben der Isolation des Stromkabels 1 in der Kabelführung 17 verhindert wird. Durch das zusätzliche Verspannen der beiden Konsolen 15, 16 gegeneinander werden die Teilstücke gegeneinander gedrückt, so dass das Stromkabel 1 zusätzlich gegen Rutschen in der Kabelführung 17 gesichert wird.

Die erfindungsgemäße Ausführungsform stellt gleichzeitig eine Art von Zugentlastung für Stromkabel 1 dar. Dabei sind die Konturen der Konsolen 15, 16 sowie der Kabelführung 17 derart bemessen, dass eine Längenausdehnung des Stromkabels 1 zu einem gewissen Grad durch Verschieben der Kabelführung 17 in den Konsolen 15, 16 durch die Schrägen ermöglicht wird, gleichzeitig wird ein Durchrutschen des Stromkabels 1 durch die Kabelführung 17 dadurch vermieden, dass bei erhöhter Zugbeanspruchung des Stromkabels 1 die Teilstücke in Zugrichtung entlang der Schrägen bewegt werden, wobei die Teilstücke sich aufeinander zu bewegen und den Klemmeffekt verstärken. Aufgrund der gegeneinander angestellten Keile der Teilstücke ist die Zugbeanspruchung des Stromkabels 1 unabhängig von der Richtung der Zugkraft. Hierdurch wird auch ein Ausschlagen oder Herausreißen des Stromkabels 1 aus den Konsolen 15,16 infolge eines Kurzschlusses, bei dem gewaltige Kräfte frei werden können, vermieden.

Es ist denkbar, in der Kabelführung 17 mehrere Durchführungen vorzusehen, so dass eine Vielzahl von Kabeln, beispielsweise auch Datenkabel oder Kühlleitungen für Stromkabel 1 in nur einer Kabelführung parallel geführt sind. Dementsprechend können die Öffnungen der Kabelführung 17 unterschiedlich sein. Als Material für die Kabelführung 17 kommen alle geeigneten Materialien, insbesondere aber schwer entflammbare und wärmeleitende Kunststoffe in Betracht.

### Bezugszeichenliste

- 1: Stromkabel
- 3: Infrastrukturkanal (ISK)
- 4: ISK-Wandung
- 5: Körper
- 6, 6.1, 6.2 6.3, 6.4: Rohrleitung
- 6.4.1: oberes Bogenende
- 6.4.2: unteres Bogenende
- 6.4.3: oberer Rohrstutzen
- 6.4.4: unterer Rohrstutzen
- 7: Innenraum
- 8: Halterung
- 9: Erdoberfläche
- 10: Graben
- 11: Rohrkörper
- 12: Zwischenraum
- 13: Drainagevlies
- 14: Schotterkeil
- 15, 16: Konsole
- 17: Kabelführung
- 17.1, 17.2 17.3, 17.4: Teilstück
- 18: Hohlraum

## Patentansprüche

1. Kanalsystem mit den folgenden Merkmalen beziehungsweise Elementen:
1.1 mit einem im Erdreich vorgesehenen Graben (2);
1.2 mit einem begehbaren, im Graben (2) gegossenen oder vorgefertigten Kanal (3) zum Aufnehmen von Stromkabeln (1) und Infrastrukturleitungen in dessen Inneren, wobei dessen Wandung (4) ein Material auf Betonbasis enthält;
**gekennzeichnet durch** die folgenden Merkmale:
1.3 das Material des Kanals (3) weist eine Wärmeleitfähigkeit auf, die wenigstens 3,0 W/(m·K) beträgt;
1.4 außerhalb des Kanals (3) sind Körper (5) zum Aufnehmen und/oder Ableiten von Wärmeenergie angeordnet.

2. Kanalsystem nach Anspruch 1, **dadurch gekennzeichnet, dass** das Material der Kanalwandung (4) die folgenden Zuschlagstoffe enthält, entweder einzeln oder in Kombination:
- Stahlspäne;
- natürliches oder expandiertes Graphit;
- Anthrazit;
- Phase-Changing-Material;
- Kohlenstoff-Nano-Röhrchen;
- sonstige verdichtete Kohlenstoffe.

3. Kanalsystem nach Anspruch 2, **dadurch gekennzeichnet, dass** auch das die Kanalwandung (4) umgebende Material die genannten Zuschlagstoffe einzeln oder in Kombination enthält.

4. Kanalsystem nach Anspruch 1 bis 3, **dadurch gekennzeichnet, dass** der den Kanal (3) umgebende Raum Rohrleitungen (6) enthält.

5. Kanalsystem nach Anspruch 4, **dadurch gekennzeichnet, dass** die Rohrleitungen (6) der Führung von Gas, insbesondere Luft, oder von Flüssigkeiten, insbesondere Wasser, dienen.

6. Kanalsystem nach Anspruch 4 oder 5, **dadurch gekennzeichnet, dass** die Rohrleitungen (6) durch Anschlussrohre mit dem Innenraum (7) des Kanals (3) und/oder mit der Atmosphäre leitend verbunden sind.

## Claims

1. A duct system having the following features and/or elements:
1.1 having a trench (2) provided in the earth;
1.2 having a traversable duct (3), which is cast in the trench (2) or prefinished for accommodating power cables (1) and infrastructure lines whose wall (4) contains a material based on concrete;
1.3 the material of the duct (3) has a thermal conductivity which is at least 3.0 W/(m*K);
1.4 bodies (5) for absorbing and/or dissipating thermal energy are situated outside the duct (3).

2. The duct system according to Claim 1, **characterized in that** the material of the duct wall (4) contains the following additives, either individually or in combination:
- steel chips;
- natural or expanded graphite;
- anthracite;
- phase-changing material;
- carbon nanotubes;
- other compacted carbons.

3. The duct system according to Claim 2, **characterized in that** the material enclosing the duct wall (4) also contains the listed additives individually or in combination.

4. The duct system according to Claims 1 through 3, **characterized in that** the space enclosing the duct (3) contains pipelines (6).

5. The duct system according to Claim 4, **characterized in that** the pipelines (6) are used for guiding gas, in particular air, or liquids, in particular water.

6. The duct system according to Claim 4 or 5, **characterized in that** the pipelines (6) have a conductive connection to the inner chamber (7) of the duct (3) and/or to the atmosphere through connection pipes.

## Revendications

1. Système de canaux comprenant les caractéristiques / éléments suivants :
1.1 un fossé (2) souterrain ;
1.2 un canal (3) praticables fondé dans le fossé (2) ou préfabriqué, dont le parois (4) comprend du matériel en béton ;
1.3 le matériel du canal (3) ayant une conductivité d'au moins 3.0 W/m*K ;
1.4 des corps (5) pour absorber et/ou dissiper de l'énergie thermique situés à l'extérieur thermique a l'extérieur due canal (3).

2. Système de canaux selon revendication 1, caractérisé en-ce que le matériel du parois (4) du canal (3) comprend les additifs suivants, séparément ou en combinaison :
des copeaux d'acier
du graphite naturel ou expansé
de l'anthracite
des matériaux à changement des phases
des nano-tuyaux-carbone
d'autre carbone compacte.

3. Système de canaux selon revendication 2, caractérisé en-ce que le matériel enveloppant le parois (4) du canal (3) aussi contient les additifs mentionnés, séparément on en combinaison.

4. Système de canaux selon revendication 1 à 3, caractérisé en-ce que l'espace enveloppant le canal (3) contient des tuyaux (6).

5. Système de canaux selon revendication 4, caractérisé en-ce que les tuyaux (6) sont utilisés pour guider du gaz, de l'air, de liquides, et de l'eau.

6. Système de canaux selon revendication 4 on 5, caractérisé en-ce que les tuyaux (6) ont une connexion conductive à la chambre intérieur (7) du canal (3) et/ou à l'atmosphère par des tuyaux de connexion.
